(19) Europäisches Patentamt / European Patent Office / Office européen des brevets

(11) **EP 2 431 832 B1**

(12) **EUROPEAN PATENT SPECIFICATION**

(45) Date of publication and mention of the grant of the patent:
**15.05.2013  Bulletin 2013/20**

(51) Int Cl.:
***G05F 1/67*** (2006.01)

(21) Application number: **10177842.1**

(22) Date of filing: **21.09.2010**

(54) **Method and arrangement for tracking the maximum power point of a photovoltaic module**

Verfahren und Anordnung zur Verfolgung des maximalen Leistungspunkts eines photovoltaischen Moduls

Procédé et agencement pour le suivi du point d'alimentation maximale d'un module photovoltaïque

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**21.03.2012  Bulletin 2012/12**

(73) Proprietor: **ABB Research Ltd**
**8050 Zürich (CH)**

(72) Inventors:
- **Escobar, Gerardo**
  **97115 Merida, Yucatan (MX)**
- **Pulli, Tuomas**
  **02660, Espoo (FI)**
- **Karppanen, Matti**
  **02780, Espoo (FI)**

(74) Representative: **Valkeiskangas, Tapio Lassi Paavali**
**Kolster Oy Ab**
**Iso Roobertinkatu 23**
**P.O. Box 148**
**00121 Helsinki (FI)**

(56) References cited:
- **CASADEI D ET AL: "Single-Phase Single-Stage Photovoltaic Generation System Based on a Ripple Correlation Control Maximum Power Point Tracking", IEEE TRANSACTIONS ON ENERGY CONVERSION, IEEE SERVICE CENTER, PISCATAWAY, NJ, US, vol. 21, no. 2, 1 June 2006 (2006-06-01), pages 562-568, XP002597293, ISSN: 0885-8969, DOI: DOI:10.1109/TEC.2005.853784**
- **CHEN L ET AL: "Flyback Inverter Controlled by Sensorless Current MPPT for Photovoltaic Power System", IEEE TRANSACTIONS ON INDUSTRIAL ELECTRONICS, IEEE SERVICE CENTER, PISCATAWAY, NJ, USA, vol. 52, no. 4, 1 August 2005 (2005-08-01), pages 1145-1152, XP011137068, ISSN: 0278-0046, DOI: DOI: 10.1109/TIE.2005.851602**
- **ITAKO K ET AL: "A New Current Sensorless MPPT Control Method for PV Generation Systems", POWER ELECTRONICS AND APPLICATIONS, 2005 EUROPEAN CONFERENCE ON DRESDEN, GERMANY 11-14 SEPT. 2005, PISCATAWAY, NJ, USA,IEEE, PISCATAWAY, NJ, USA, 11 September 2005 (2005-09-11), pages P.1-P.9, XP010933652, DOI: DOI:10.1109/EPE.2005.219250 ISBN: 978-90-75815-09-2**
- **VEERACHARY M ET AL: "V</E1><E6>2</E6>-based power tracking for nonlinear PV sources", IEE PROCEEDINGS: ELECTRIC POWER APPLICATIONS, INSTITUTION OF ELECTRICAL ENGINEERS, GB, vol. 152, no. 5, 20 June 2005 (2005-06-20), pages 1263-1270, XP006025147, ISSN: 1350-2352, DOI: DOI:10.1049/IP-EPA: 20045227**

**Description**

FIELD OF THE INVENTION

The present invention relates to a method and an arrangement for tracking the maximum power point (MPP) of a photovoltaic cell or module. More specifically, the invention relates to a method and an arrangement with which the maximum power point can be tracked fast and accurately in single-phase photovoltaic applications without measurement of output current from the photovoltaic cell or module and in environments where the irradiation and temperature of the cell changes rapidly.

BACKGROUND OF THE INVENTION

It is known in the art of photovoltaic (PV) cells, modules or arrays to use a maximum power point tracker (MPPT), which tries to ensure that the maximum available power is extracted from the irradiated cells.

Most of the conventional MPPT methods deliver a reference for the PV voltage, which is later used in a limited bandwidth proportional plus integral (PI) controller to generate the amplitude of the grid-side current reference.

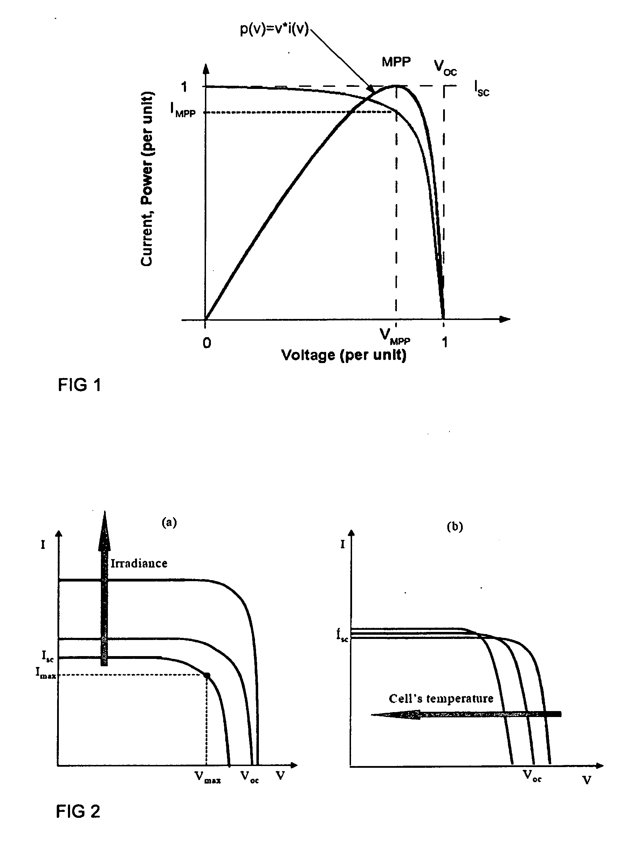

The voltage and current output characteristic of a photovoltaic cell or module is usually represented in the form of $i$-$v$ or $p$-$v$ curves, as shown in Figure 1. In Figure 1 the $i$-$v$ curve is the curve that starts at $i = 1$ and ends at $v = 1$, and the p-v curve is the curve having a maximum point when voltage $v = V_{MPP}$.

The most important electrical characteristics of PV panels are presented in Figure 1. Figure 1 shows the short circuit current ($I_{SC}$), which is the maximum value of current the cell can generate, and it is produced under short-circuit condition ($v= 0$ V). Open circuit voltage ($V_{OC}$) corresponds to the highest value of voltage generated in open circuit condition ($i = 0$ A). Further, Figure 1 shows the maximum power point (MPP), which is the operating point (voltage $V_{MPP}$ and current $I_{MPP}$) where the PV cell produces the maximum power $(P_{MPP} = V_{MPP} \cdot I_{MPP})$.

The relationship between voltage and current can be expressed as the following implicit static nonlinearity

$$i = I_{SC}\left[1 - \exp\left(\frac{v - V_{OC} + Rs \cdot i}{V_T}\right)\right] \qquad (1)$$

where $V_T$ is referred to as the thermal voltage, which is calculated according to the Boltzmann constant (K = 1.38.10$^{-23}$ J/K), magnitude of electron charge (q = 1.6.10$^{-19}$ C), PV temperature (T = (K)), idealizing factor (1 <m<2) and number of cells in series (N), according to $V_T = \dfrac{mNKT}{q}$ ; $R_S$ is the series resistance, which depends on $V_{MPP}, I_{MPP}, V_{OC}$ and $I_{SC}$ under standard conditions and $V_T$.

The previous expression (1) can be further reduced if $R_s \ll 1$

$$i = I_{SC}\left[1 - \exp\left(\frac{v - V_{OC}}{V_T}\right)\right] \qquad (2)$$

It should be noted that current $i = i(v)$ is a static explicit nonlinear function of the voltage, i.e., dynamics are not considered. The power delivered by the PV module can be computed simply as a product of current and voltage as follows

$$p = i \cdot v \qquad (3)$$

Manufacturers of photovoltaic cells and modules usually provide the open circuit voltage ($V_{OC}$), the short circuit current ($I_{SC}$) and the maximum power point ($P_{MPP}=V_{MPP} \cdot I_{MPP}$) under standard test conditions (irradiance of 1000W/m$^2$ at 25°C cell temperature). However, these parameters, and consequently the $i$-$v$ PV characteristic, are affected by temperature and solar irradiation as shown in Figure 2.

Figure 2 shows that the open circuit voltage $V_{OC}$ varies with both irradiance and temperature. In fact, $V_{OC}$ has a negative temperature coefficient and depends logarithmically on the irradiance [1]. Figure 2 also shows that, although the short circuit current $I_{SC}$ changes proportionally to the irradiance, it is relatively insensitive to temperature variation [1].

In any case, the MPP is varying in function of such environmental conditions, and thus it is important to have a strategy to guarantee the operation of the PV module on the MPP at all times. These strategies are referred to in the PV systems literature as maximum power point tracking (MPPT) algorithms [2], [3] and [4].

The PV panel must be forced to operate in the MPP as shown in the p-v plot of Figure 1. This guarantees that the power extracted from the PV module is the maximum power available. This objective can be recast as a regulation objective that can be fulfilled if one of the following is satisfied as $t \to \infty$ :

$$
\begin{aligned}
i &\to i_{MPP} \\
v &\to v_{MPP} \\
p &\to P_{MPP}
\end{aligned}
\qquad (4)
$$

where $i_{MPP}$, $v_{MPP}$ and $P_{MPP}$ are the current, voltage and power in the MPP. From now on, $(\cdot)^*$ represents the reference for $(\cdot)$.

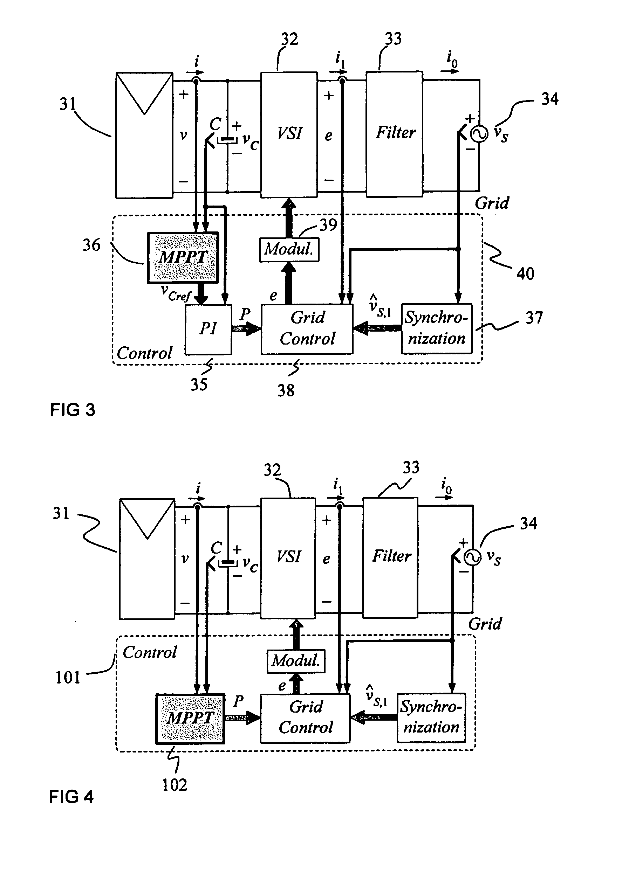

In the case of single-stage inverters, as those shown in Figures 3 and 4, this regulation objective is achieved by modulating the amplitude of the grid-side current $i_0$. The reference for this current, referred to as P, is generated by the MPPT algorithm. In Figures 3 and 4 a basic topology for the photovoltaic system is presented. A solar panel, string or module 31 produces a DC voltage v. A capacitor C is connected in parallel with the panel, and the voltage from the parallel connection is fed to an inverter 32, which is presented in Figures 3 and 4 as a voltage source inverter (VSI). The output of the inverter is filtered with a filter 33 and fed further to the grid 34.

In the known MPPT algorithms, the generation of P is performed indirectly by means of an intermediate PI controller 35 as shown in Figure 3. In this case, the MPPT 36 generates the voltage reference $v_{Cref}$ for the PV voltage $v_C$, which is then compared to the measured $v_C$, and the difference is used by the PI controller 35 to generate the amplitude P. The control block 40 of Figure 3 also includes a synchronization block 37, which reconstructs the frequency and phase of the grid voltage for producing a desired inverter output current, and a grid control block 38, which produces a voltage reference for the modulator 39. The PI controller of Figure 3 must be tuned to have a relatively small bandwidth to alleviate the effect of the 2$^{nd}$ harmonic fluctuation. As a result, a poor dynamic response is obtained as the response speed is considerably reduced.

The current reference is computed from the obtained amplitude information P as

$$
i_0^* = \frac{P}{v_{S,RMS}^2} v_{S,1}
\qquad (5)
$$

where $v_{S,1}$ is the fundamental component of the grid voltage, and $v_{S,RMS}$ its RMS value. Usually $v_{S,1}$ is obtained by means of an external PLL or any other synchronization process. A current control loop is then designed to guarantee that the grid-side current $i_0$ follows such a reference $i_0^*$ defined above in an accurate and fast manner.

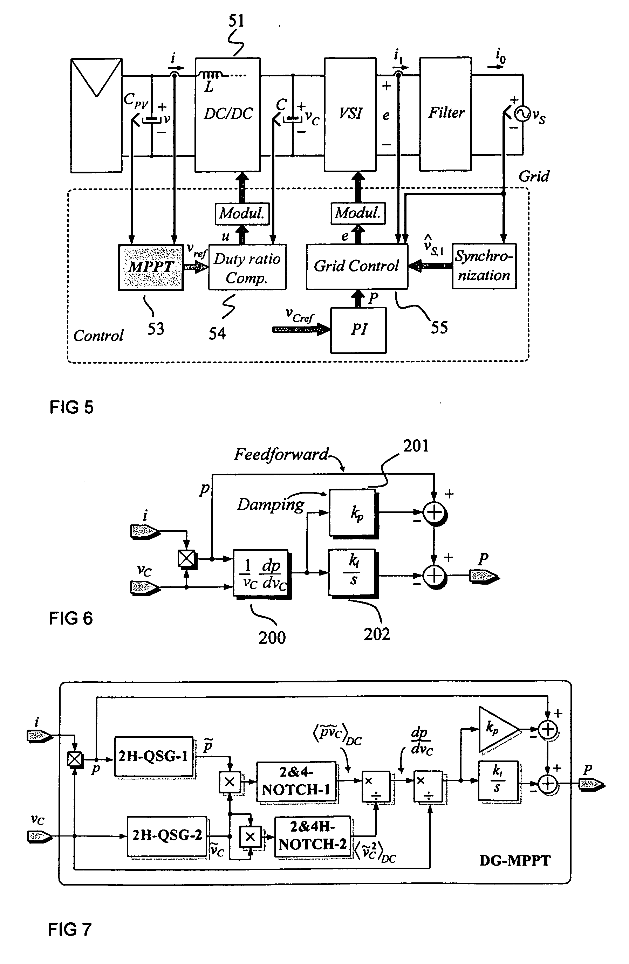

In the case of dual-stage converters, as shown in Figure 5, the MPPT generates the voltage reference $v_{ref}$ for the input capacitor $C_{PV}$ (PV voltage), which is then used to compute the duty ratio u in block 54 for the DC-DC converter 51. In most dual-stage topologies, the output voltage of the DC-DC converter is controlled by the inverter, while the input voltage v is controlled by the DC-DC converter. That is, the DC-DC converter 51 is responsible for guaranteeing the operation in the MPP. The amplitude P for the current reference is generated by a PI controller 52 that guarantees the regulation of the capacitor voltage $v_C$ towards a given constant reference $v_{Cref}$. The voltage reference $v_{Cref}$ is a design parameter defined externally. The amplitude P is fed to a grid control block 55, which operates to produce a voltage reference e for producing a desired current $i_1$.

The most common MPPT algorithms are the constant voltage (CV), the perturbation and observation (P&O) and the incremental conductance (IncCond), and modifications to them. In [2], [3] and [4] a survey on the different MPPT schemes is presented as well as a comparative study. In fact, both P&O and IncCond are based on a perturb and observe approach. The idea behind this approach consists in perturbing the PV voltage by adding or subtracting a small step and then observing the resulting changes in power. A decision based on these changes is then made to decrease or increase the PV voltage in the next sampling time.

From these algorithms, a reference for the PV voltage is obtained, which is later used in a PI system to generate the final control signal, usually the amplitude of the reference for the grid-side current. Both methods, P&O and IncCond, usually oscillate close to the MPP as they are based on a perturb and observe process. On the other hand, the CV has no oscillations but it rarely reaches the MPP.

An interesting issue in MPPT schemes that has attracted the attention of many researchers is the performance under rapidly changing atmospheric conditions [5], [6], [7], [8]. It has been observed that P&O suffers from big excursions in the wrong direction after rapidly changing irradiation conditions, that is, P&O fails to track the MPP effectively, while IncCond may still show good accuracy and efficiency in these conditions.

In [9] the authors present MPPT methods based on the idea of reconstructing the variation of power with respect to voltage on the PV (*dp/dv*) or the variation of power with respect to the duty ratio of the DC-DC converter attached to the PV (*dp/dD*). The authors deal with the problem of attaching a battery charger after the DC-DC converter, which restricts the output voltage to be constant. Thus, the maximization of output power turns out to be equivalent to maximizing the output current of the DC-DC converter. Hence, the measurement of the PV voltage becomes unnecessary. The interesting point here is that the authors not longer maximize the PV power but the power after the DC-DC converter, which is referred as the actual usable power.

Common drawback in the known MPPT schemes is that current measurement from the PV panel is required.

Document D. Casadei et al: "Single-Phase Single-Stage Photovoltaic Generation System Based on a Ripple Correlation Control Maximum Power Point Tracking", IEEE Transactions on Energy Conversion, vol. 21, no. 2, pages 562-568, 1 June 2006 discloses a maximum power point tracking method in which the current and voltage low-frequency oscillations introduced in the PV panels by the single phase utility grid are used as perturbation signals.

BRIEF DESCRIPTION OF THE INVENTION

An object of the present invention is to provide a system and a method so as to solve the above problems. The object of the invention is achieved by a system and a method, which are characterized by what is stated in the independent claims. Preferred embodiments of the invention are disclosed in the dependent claim.

The invention is based on estimating the derivative of power from the cell as a function of voltage of the cell. Further the power from the cell is not calculated based on the direct measurement of current from the cell, instead, the power is reconstructed from signals measured from the AC side of the inverter of the system. Especially harmonic components of the PV voltage and estimated power are used in the MPP tracker.

In contrast to most conventional maximum power point trackers (MPPT) schemes, the present method does not follow the perturbation and observation approach. Instead, the idea behind the proposed method is to use the information on the gradient of power with respect to the PV voltage to establish the amplitude of the grid-side current, which, in its turn, guarantees convergence of state trajectories towards the MPP. The present scheme is thus referred to as a current sensorless direct gradient maximum power point tracker "DG-MPPT-iless".

Most of the conventional MPPT methods deliver a reference for the PV voltage, which is later used in a limited bandwidth proportional plus integral (PI) controller to generate the amplitude of the grid-side current reference. In contrast, the present method delivers the amplitude directly, thus naturally guaranteeing a considerably faster response.

The proposed DG-MPPT-iless for the single-stage topology can directly deliver the power reference P, which is used as the modulation amplitude to build the grid side current reference. In addition, it can be re-structured so as to deliver a PV voltage reference as in most conventional methods. This reference is then used in an additional PI controller to generate P.

The method does not require measurement of the PV current normally used to generate the PV power signal, thus reducing the number of sensors. Instead, estimators have been designed to recover information provided by the PV power. The design of the estimators is based on the structure of the system mathematical model, and uses information available on the AC side of the inverter.

The proposed DG-MPPT-iless for the single-stage topology is not based on the perturbation and observation concept, therefore very small ripple is expected in the generation of the modulation amplitude P. This has the additional advantage of producing a cleaner grid side current.

The method utilizes phase information of needed signals for tracking the MPP of a PV module and hence the absolute amplitude of the signals is not needed. This is very useful for the simplification of the method in practical implementation. In addition, variations e.g. in capacitance of the input capacitor interfacing PV module or losses of the inverter stage do not affect the performance of the method significantly.

BRIEF DESCRIPTION OF THE DRAWINGS

In the following, the invention will be described in greater detail by means of preferred embodiments with reference to the attached drawings, in which

Figure 1 shows *i-v* and *p-v* curves of a PV panel,
Figure 2 shows the influence of (a) solar irradiance and (b) cell's temperature on the PV *i-v* characteristic curve,
Figure 3 shows a connection of the PV panel to the grid by means of a single-stage inverter, and controller using an indirect MPPT,
Figure 4 shows a connection of the PV panel to the grid by means of a single-stage inverter,
Figure 5 shows a connection of the PV panel to the grid by means of a dual-stage inverter,
Figure 6 shows a direct regulation controller DG-MPPT for the single-stage inverter,
Figure 7 shows DG-MPPT for a single-stage inverter,
Figure 8 shows a single-phase single-stage inverter grid-connected through an LCL filter,
Figure 9 shows an alternative implementation of the DG-MPPT for single-phase single-stage inverter,
Figure 10 shows an estimator of the 2nd harmonic component of the PV power $\tilde{p}$ (2H-POW),
Figure 11 shows a simplification to the estimator of the 2nd harmonic component of the PV power p and variable z,
Figure 12 shows an estimator of the DC component of the PV power (DC-POW),
Figure 13 shows a notch filter used to cancel out the 2nd and the 4th harmonic components,
Figure 14 shows a simplification to the structure of Figure 13,
Figure 15 shows an embodiment of the present invention,
Figure 16 shows another embodiment of the invention,
Figure 17 shows another embodiment of the invention,
Figure 18 shows a simplified structure of an embodiment,
Figure 19 shows another simplified structure of an embodiment,
Figure 20 shows biased sinusoidal irradiation profile for the simulations carried out, and
Figures 21, 22, 23 and 24 show simulation results.

## DETAILED DESCRIPTION OF THE INVENTION

An approach to develop the present invention is to first develop an MPPT controller with PV current measurement using the information of the derivative of power p as a function of $v_C$ i.e. $\dfrac{dp}{dv_C}$. The idea of using the derivative $\dfrac{dp}{dv_C}$ has a very intuitive significance since it represents the slope of the p-v characteristic curve. It should be noted that the derivative is exactly zero at $v_C = v_{MPP}$, it is positive for $v_C < v_{MPP}$, and negative for $v_C > v_{MPP}$.

As seen from Figure 4, which shows the development towards the present invention, both current from the photovoltaic panel and capacitor voltage are measured. These measured values are fed to a control block 101, and more specifically to a maximum power point tracker MPPT 102. Figure 6 shows the basic structure of the MPPT having the measured current and capacitor voltage as inputs.

From the block diagram of Figure 6 it can be seen that the measured current and voltage are multiplied, and the obtained product, representing power, is fed to a derivative block 200 together with the measured capacitor voltage. The block 200 calculates the above-mentioned derivative and further divides the derivative by the measured capacitor voltage. The division by $v_C$ makes a normalization and also helps to balance the slope whose absolute value is much lower in $v_C < v_{MPP}$ than in $v_C > v_{MPP}$. However, $v_C$ is positive in the whole operating region, and thus this division does not affect the sign of the slope. The functioning of the method is based on the information of the sign of such a slope.

The obtained derivative is then used in the PI plus feedforward controller as shown in the block diagram of Figure 6, where $k_p$ and $k_i$ are the proportional and integral gains in blocks 201 and 202, respectively. As further seen in Figure 6, the results from the blocks 201 and 202 are subtracted from the calculated power signal p to produce a signal P, which is the outcome of the MPPT and can be used as a reference value for the amplitude of the output current, as above explained.

The estimation of the derivative $\dfrac{dp}{dv_C}$ is based on the information provided by the 2nd harmonic component of the unavoidable fluctuation present in both power and voltage, $\tilde{p}$ and $\tilde{v}_C$, respectively. These harmonic components are then processed as shown in the more detailed diagram of the DG-MPPT shown in Figure 7.

The above MPPT method based on the concept of direct-gradient is referred as DG-MPPT method. This method itself provides fast response in case of rapid changes in irradiation and temperature and it is usable in connection with a single-phase grid connection. The idea behind the DG-MPPT consists in the reconstruction of the rate of change of PV power with respect to PV voltage *(dp/dv),* which is later integrated to directly generate the power reference. For the reconstruction of *dp/dv* the harmonic ripple present in those two signals are extracted and correlated. In the single-stage case, PV signals are naturally perturbed by a second harmonic caused by the fluctuating delivered power. That is, DG-MPPT method uses this second harmonic ripple already contained in the PV signals rather than introducing additional perturbation as in most conventional MPPT methods. DG-MPPT requires the measurement of both PV voltage and PV current, where the latter is needed for the computation of the PV power. In DG-MPPT the $2^{nd}$ harmonic components of both PV power p and capacitor voltage $v_C$ are estimated, which were referred as $\tilde{p}$ and $\tilde{v}_C$, respectively, as shown in Figure 7.

The above DG-MPPT with current measurement is explained only for better understanding of the present invention, in which the measurement of PV current is not needed.

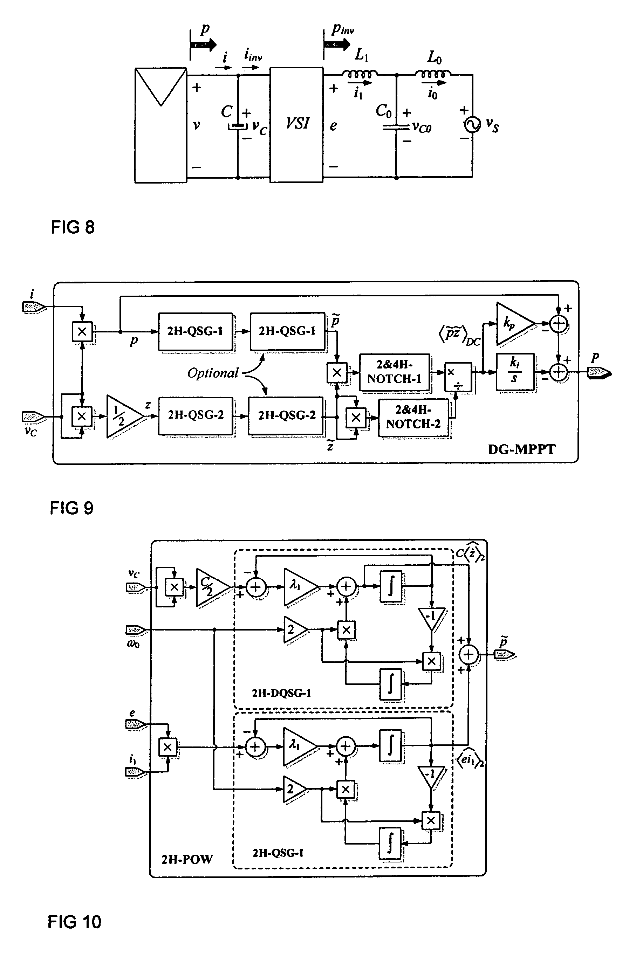

Let us consider the single-stage case of a single-phase inverter connected to the grid by means of an LCL filter as shown in Figure 8. The mathematical model of the capacitor on the DC side of the VSI of Figure 8 can be obtained as a power balance in the following form

$$v_C C \dot{v}_C = v_C i - e i_1 \qquad (6)$$

where $v_C$ is the voltage in the capacitor connected in parallel to the PV, and thus, $v_C = v$; $i$ is the current of the PV; $e$ is the injected voltage, which is generated by the VSI; $i_{inv}$ is the current on the inverter DC side; $i_1$ is the current on the inverter AC side, which is equal to the current on the inductor $L_1$.

And for the LCL filter on the AC side of the inverter the model is

$$\begin{aligned} L_1 \dot{\hat{i}}_1 &= -v_{C0} + e \\ C_0 \dot{v}_{C0} &= i_1 - i_0 \\ L_0 \dot{\hat{i}}_0 &= v_{C0} - v_s \end{aligned} \qquad (7)$$

where $i_0$ is the current of inductor $L_0$, also referred as current on the grid side; $v_{C0}$ is the voltage in the capacitor $C_0$; and $v_s$ is the grid voltage.

It is assumed that the VSI has no losses, and thus, the power at its input equals the power delivered at its output. Moreover, in what follows it is assumed that e is a known signal coming out of the grid controller. A grid controller is a device which synchronizes the operation of the inverter with the grid voltage and produces switching sequences for the switching devises in the VSI.

Model (6)-(7) and the developments that follow hold for different topologies of inverters. This is possible as only the modulation signal e has been considered in the model. Out of this signal, and depending on the topology selected, the switching sequences can be generated using a suitable modulation algorithm.

In the following, the present invention, in which PV current is not measured, is described in more detail. Instead of estimating the PV current based on a model of the system, the idea is to indirectly reconstruct the $2^{nd}$ harmonic component of the PV power p using the information of the power in the inverter AC side, that is, the power given by $p_{inv} = e i_1$. Notice that $p_{inv}$ can be obtained as the product of two known signals.

To facilitate the design, consider the following transformation

$$z = \frac{v_C^2}{2} \qquad (8)$$

Out of which the model gets the form

$$C \dot{z} = p - e i_1 \qquad (9)$$

where we have used the fact that $p = v_C i$, which represents the power delivered by the PV. Notice that with this transformation, the MPP, originally at $[p_{MPP}, v_{MPP}]$, has been mapped to the point $[p_{MPP}, z_{MPP}]$. Based on transformation (8) a new (power to z variable) pz-characteristic curve can be obtained preserving the same convexity of the original (power to voltage) *pv*-characteristic curve. Moreover, the MPP is also reached whenever the power reaches $p_{MPP}$. Roughly speaking, it is equivalent to use variable z to search the MPP in this new *pz*-characteristic curve, as using the voltage variable $v_C$ in the *pv*-characteristic curve.

Based on the model description (9), the DG-MPPT can also be realized using the new variable *z* as shown in Figure 9. This alternative implementation of the DG-MPPT is the base for the current sensorless method as it is described next. All along the paper the notation $\langle x \rangle_k$, is used as the operator that extracts the k-th harmonic component of variable *x* . For instance, $\langle x \rangle_2$ is the operator that extracts the 2nd harmonic component of *x* . All along the paper we use indistinctly $\langle x \rangle_0$ or $\langle x \rangle_{DC}$ to represent the operator that extracts the DC component of signal *x* .

As above stated, the measurement of the PV current can be substituted by estimations using available information. To better understand the idea behind this estimation process let us extract the 2nd harmonic component on both sides of (9), i.e., after application of operator $\langle \cdot \rangle_2$ we obtain

$$\langle C\dot{z} \rangle_2 = \langle p - ei_1 \rangle_2 = \langle p \rangle_2 - \langle ei_1 \rangle_2 \qquad (10)$$

Solving for $\langle p \rangle_2$ yields

$$\langle p \rangle_2 = C\langle \dot{z} \rangle_2 + \langle ei_1 \rangle_2 \qquad (11)$$

where linearity of the operator $\langle \cdot \rangle_2$ has been assumed.

Roughly speaking, the 2nd harmonic component of the PV power can also be obtained by adding the 2nd harmonic components of both the power in AC inverter side $p_{inv}$ and the power handled by the capacitor C, with the advantage that the current on the DC side is no longer necessary. These harmonic components can be estimated by using, for instance, the band-pass filters (BPF) 2H-QSG shown in Figure 10, which are quadrature signal generators (QSG) tuned at the 2nd harmonic of the fundamental.

The estimate of $\langle p \rangle_2$ can now be used in the place of $\tilde{p}$ , which appeared in the DG-MPPT scheme of Figure 9 based on current measurement. Figure 10 shows the block diagram of the proposed estimator, referred as 2H-POW, used to reconstruct $\tilde{p}$ . This estimator uses mainly two 2H-QSG to reconstruct the 2nd harmonic components $\langle \dot{z} \rangle_2$ and $\langle ei_1 \rangle_2$. They are referred as 2H-DQSG-1 and 2H-QSG-1, respectively.

In Figure 10 block 2H-DQSG-1 receives the calculated variable *z* as input together with the fundamental frequency of the grid voltage $\omega_0$ which can be obtained with an external phase locked loop (PLL), for example. Block 2H-QSG-1 receives the same frequency and the product $ei_1$. The frequency response of 2H-DQSG-1 and 2H-QSG-1 consists of a very narrow resonant peak tuned at twice the fundamental frequency. These very selective estimators can thus be used as effective estimators of the second harmonic component with a relatively fast response.

The output of the integrator on the top of 2H-DQSG-1 in Figure 10 is the estimate of the 2nd harmonic of the input signal. Therefore, the input to such integrator must be the time derivative of this 2nd harmonic component estimate, i.e., $\frac{d}{dt}\left(\langle z \rangle_2\right)$. In other words, the time derivative of the estimate of the 2nd harmonic component is available from the 2H-DQSG-1. Here $\langle \dot{z} \rangle_2$ is reconstructed by using such available signal $\frac{d}{dt}\left(\langle z \rangle_2\right)$. According to (10), the gain $\lambda_1$ must be the same in both 2H-DQSG-1 and 2H-QSG-1.

For the estimation of $\langle \dot{z} \rangle_2$ it is assumed that both the operators $\langle \cdot \rangle_2$ and $\frac{d}{dt}$ commute. This assumption is valid if the fundamental frequency $\omega_0$ varies relatively slow. This is equivalent to say that the QSG is almost linear.

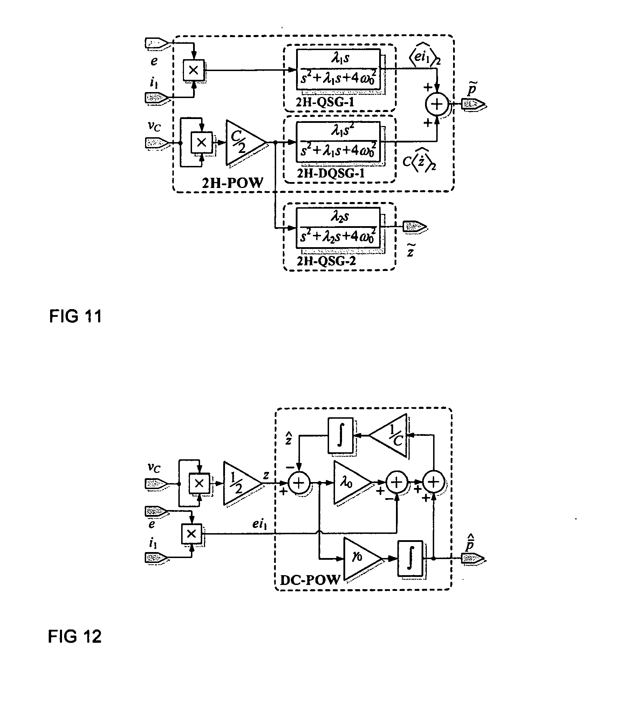

The 2nd harmonic component of the variable *z*, i.e., $\langle z \rangle_2$ can still be estimated as in the DG-MPPT of Figure 9, that is, by using yet another QSG tuned at the 2nd harmonic to get $\tilde{z}$ . This QSG is similar band-pass filter as the 2H-QSG-1 of Figure 10 and is referred as 2H-QSG-2 in Figures 10 and 11.

In the case that the fundamental frequency $\omega_0$ is a known constant, then the estimators of the 2nd harmonic component of power *p* and variable *z* represented by $\tilde{p}$ and $\tilde{z}$ , respectively, can be reduced to simple BPFs as shown in Figures 10 and 11.

In the DG-MPPT with current measurement shown in Figure 9, the PV power p was also used as a feedforward term, however, this signal is not available anymore. According to an embodiment the DC component of p is reconstructed by means of another estimator, and then this estimate is used as feedforward term.

Consider the above model (9), and assume that the DC component of $p$, referred as $\bar{p} = \langle p \rangle_0$, is an unknown constant. Based on the structure of model (9), the following estimator can be structured, which is referred as DC-POW

$$C\dot{\hat{z}} = \hat{\bar{p}} - ei_1 + \lambda_0(z - \hat{z})$$
$$\dot{\hat{\bar{p}}} = \gamma_0(z - \hat{z})$$

$$(12)$$

where $\lambda_0 > 0$ and $\gamma_0 > 0$ are two design parameters; $\hat{z}$ and $\hat{\bar{p}}$ represent the estimates of $z$ and $\bar{p}$, respectively. According to an embodiment the estimate $\hat{\bar{p}}$ is used then as the feedforward term for the PI in the DG-MPPT-iless. This feedforward term improves the dynamical performance of the DG-MPPT-iless.

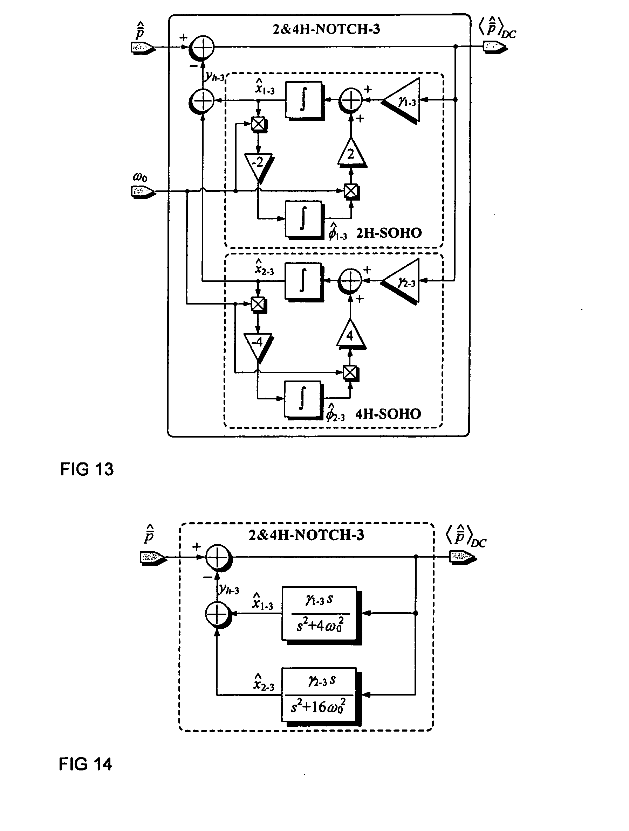

As the signal $\hat{\bar{p}}$ contains 2nd and 4th harmonic components, then, according to an embodiment, such components are filtered out before using the signal as the feedforward signal. This filtering is performed, for example, by means of a notch filter of the form 2&4-NOTCH-1 as shown in Figure 13, thus avoiding reinjection of harmonic distortion to the construction of P. A block diagram of this estimator is presented in Figure 12 and it is based on the equation (12).

The idea behind the above referred notch filter consists in designing an estimator for the harmonic distortion $y_h$, which in this case is mainly composed by the 2nd and 4th harmonic components. This estimated disturbance $y_h$ is then subtracted from the overall polluted signal $\hat{\bar{p}}$ as shown in Figure 13, thus yielding the DC component mainly. Notice that the estimator is composed of two second-order harmonic oscillators (SOHO) tuned at the 2nd (2H-SOHO) and 4th harmonics (4H-SOHO), where $\gamma_1$ and $\gamma_2$ are two positive design parameters that simultaneously fix the gain and the quality factor of the notch filters.

In the case of a well known and constant fundamental frequency $\omega_0$, the structure of Figure 13 can be reduced to a structure shown in Figure 14.

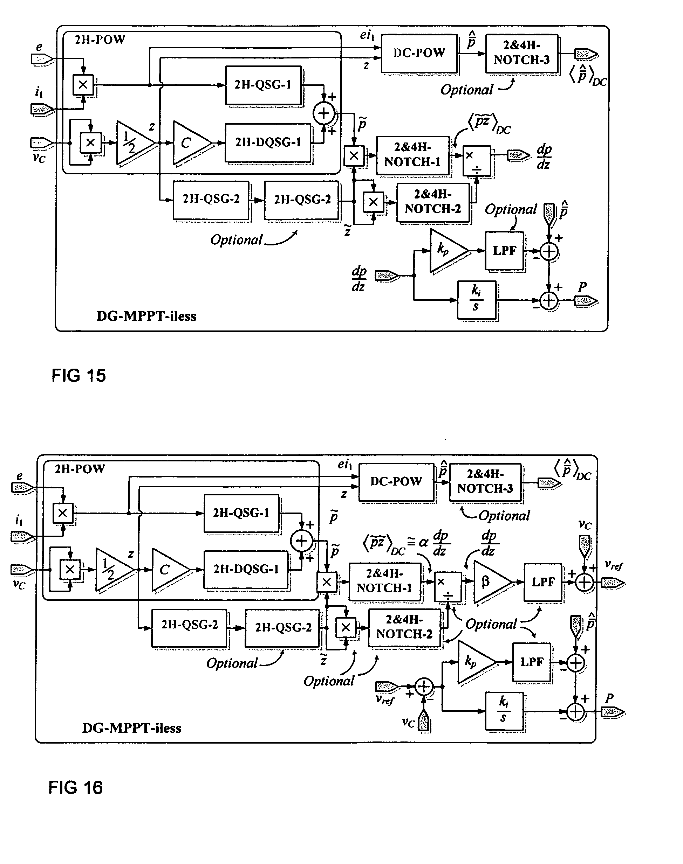

Summarizing, the block diagram of the modified DG-MPPT-iless for the single-stage PV inverter is shown in Figure 15. The method comprises the estimator 2H-POW for $\tilde{p}$, the estimator DC-POW for the DC component of power $\hat{\bar{p}}$, and uses variable z in the place of the capacitor voltage $v_C$.

It can be shown that the DG-MPPT-iless scheme is robust with respect to uncertainties in the capacitance C. For this, notice that the DC component of the product of both disturbances $\tilde{p}$ and $\tilde{z}$, which is used as an estimation of $\dfrac{dp}{dz}$ in the DG-MPPT-iless, can be computed as follows

$$\langle \tilde{p}\tilde{z} \rangle_0 = \langle (C\langle \dot{z} \rangle_2 + \langle ei_1 \rangle_2)\langle z \rangle_2 \rangle_0$$
$$= \langle C\langle \dot{z} \rangle_2 \langle z \rangle_2 \rangle_0 + \langle \langle ei_1 \rangle_2 \langle z \rangle_2 \rangle_0$$
$$\cong \langle \langle ei_1 \rangle_2 \langle z \rangle_2 \rangle_0$$

$$(13)$$

where the term $\langle C\langle \dot{z} \rangle_2 \langle z \rangle_2 \rangle_0$ vanishes as it is the product of two signals having a phase shift difference of 90 degrees. This produces mainly higher order harmonics, which are filtered out, with no DC component. In other words, the DG-MPPT-iless method is robust with respect to uncertainties in the capacitor C as the term associated to C vanishes in the steady state during the extraction of the DC component of the product $\tilde{p}\tilde{z}$. Based on this idea, the term associated to C could even be eliminated from the DG-MPPT-iless method. However, it has been observed that this term may prevent higher transients, and thus, it may have a positive effect on the dynamic response.

On the other hand, it has been observed that uncertainties in the capacitance C may produce higher distortion in the estimate $\hat{p}$ , , mainly composed of 2nd and 4th harmonics. Therefore, an extra notch filter of the form 2&4-NOTCH-3 to $\hat{p}$ is included, as shown in Figure 15, before using it as a feedforward term.

A low pass filter can also be included to the design together with the proportional term $k_p$ of the PI controller, as shown in Figure 15. This simple modification may alleviate the ripple in the modulation amplitude P. For instance, a LPF of the form $\dfrac{1}{\tau s + 1}$ , with a time constant $\tau$ , might be enough.

Moreover, the DG-MPPT-iless of Figure 15 as well as the versions of the DG-MPPT shown in Figures 7 and 9 using current measurement can be re-structured as voltage reference generators, just as conventional MPPTs. For this purpose, consider the following definition

$$v_{ref} = v_C + \beta \frac{dp}{dz} \tag{14}$$

where $\beta$ is a design parameter.

Out of this, the input to the PI controller, originally $\dfrac{dp}{dz}$ , ' would be

$$v_{ref} - v_C = \beta \frac{dp}{dz} \tag{15}$$

A scheme of this alternative description of the DG-MPPT-iless is shown in Figure 16.

In other words, the DG-MPPT-iless scheme computes a time varying increment $\beta \dfrac{dp}{dz}$ , which is added to the actual capacitor voltage (or PV voltage) $v_C$ to form an intermediate variable referred as the reference voltage $v_{ref}$ . The objective of the PI consists now in guaranteeing that the capacitor voltage $v_C$ follows such a reference $v_{ref}$ . Notice that the increment depends directly on the rate of change $\dfrac{dp}{dz}$ , which has the same sign of $\dfrac{dp}{dv_C}$ . Therefore, it is expected that the capacitor voltage will reach the MPP following the direction of the gradient.

A low pass filter may also be included to filter out additional ripple from signal $\beta \dfrac{dp}{dz}$ , and to keep a smooth variation of such increment. For instance a first order filter of the form $\dfrac{1}{\tau_2 s + 1}$ , with $\tau_2$ the time constant, would be enough.

Moreover, to guarantee a good performance in a wider range of power, the gain $\beta$ can be made a function of the DC component the estimated power $\hat{p}$ . .

An advantage of the embodiment, where the DG-MPPT-iless delivers an intermediate reference voltage, is that the DG-MPPT-iless can be combined with other conventional MPPT schemes delivering also a voltage reference. Notice that in all these cases, the capacitor voltage is forced to reach the reference by means of a PI controller as well.

Another option to restructure the DG-MPPT-iless scheme consists in computing the voltage reference as the

integral of $\dfrac{dp}{dz}$ as follows.

$$v_{ref} = \frac{\beta}{s}\left(\frac{dp}{dz}\right) \tag{16}$$

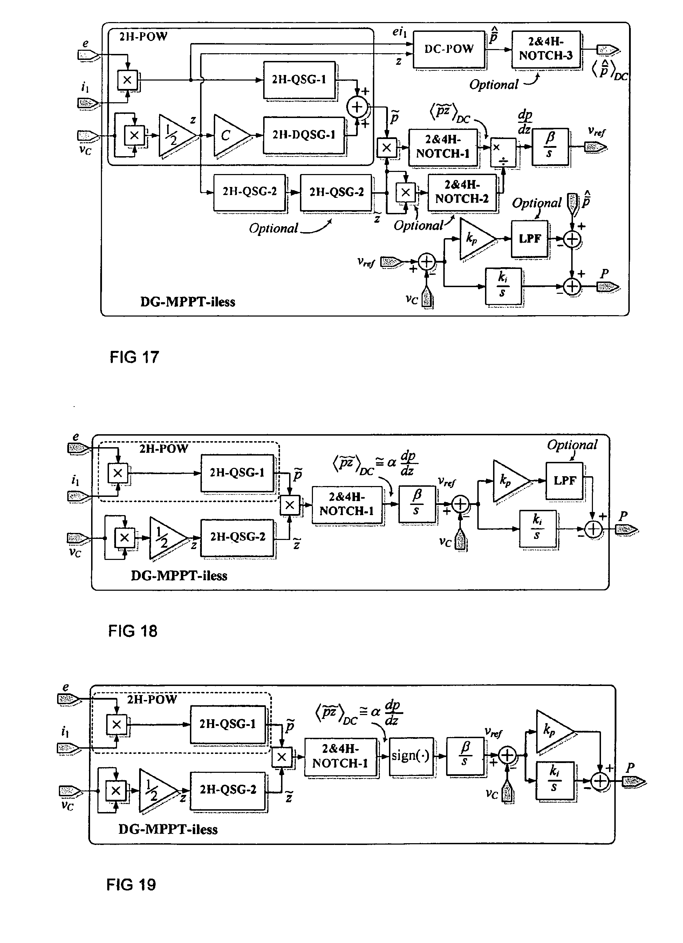

where $\beta$ is a design parameter. In this case the integral term will integrate the variable $\dfrac{dp}{dz}$ to generate the voltage reference $v_{ref}$, and the integration process will stop exactly at the point where $\dfrac{dp}{dz} = 0$, = 0, which happens exactly at the MPP. A scheme of this representation is shown in Figure 17.

Some of the terms and signals in the DG-MPPT-iless can be eliminated to reduce the complexity of the scheme without compromising the overall performance. For instance, the division by $\langle \tilde{z}^2 \rangle_0$ does not affect the sign of $\dfrac{dp}{dz}$, , as it only gives an appropriate scaling, which makes the result slightly more linear. Its computation, however, is quite involved, and thus, it can be eliminated. The feedforward term allows a faster response during big transients and allows a better tuning of the PI gains. However, during operation in the MPP, and for relatively slow changes in irradiation, this term does not show a considerable effect, and thus it can be eliminated as well.

As above mentioned, the term associated to the capacitor power $\langle C\langle \dot{z} \rangle_2 \langle z \rangle_2 \rangle_0$ can be eliminated as it vanishes in the steady state. It may be, however, necessary to retune the parameters of the PI scheme to allow a slower response. As a result of all these simplifications, the DG-MPPT-iless can be considerably reduced as observed in the diagram of Figure 18.

It can be seen from Figure 18 that the input variables to the system are output voltage of the inverter $e$, which can be obtained from the grid controller, output current of the inverter $i_1$ and capacitor voltage $v_C$. Power signal $p$ and parameter $z$ are calculated from these variables. The second harmonic components are extracted from p and z, and these components are multiplied with each other. Further a DC component is extracted from the obtained product, and this DC component represents derivative of power with respect to variable z.

Figure 19 shows yet another modification to allow uniform growth of the reference voltage $v_{ref}$ in the admissible operation region. For this purpose, a function is included to extract the sign of $\dfrac{dp}{dz}$, which is later integrated. Notice that with this modification, additional slight oscillations are expected once the MPP is reached, as it is usual in high gain controllers.

For the simulation test, the single-phase single-stage PV inverter of Figure 8 is considered, which is grid-connected through an LCL filter. This system has been designed using the following parameters: $L_1$=2 mH, $L_0$=833 $\mu$ H, $C_0$=10 $\mu$ F, $C$=2200 $\mu$ F. This system includes a string of PV modules producing a power of about $P_{MPP}$=2680 W in the MPP at 1000 W/m$^2$ of irradiance and a temperature of 25°C. This corresponds to a voltage in the MPP of about $v_{MPP}$=362 V, and a current of $i_{MPP}$=7.36 A. The grid voltage is a sinusoidal signal with an amplitude of 230 V$_{RMS}$, and a fundamental frequency of $\omega_0$ =100$\pi$ r/s ($f_0$ = 50 Hz).

The system is controlled by the DG-MPPT-iless of Figure 16, plus a suitable grid controller. The proportional and integral gains of the DG-MPPT-iless have been tuned to $k_p$ = 40 and $k_i$ = 75 . The parameters for the filters 2H-QSG-1, 2H-DQSG-1 and 2H-QSG-2 are tuned to $\lambda_1 = \lambda_2 = 200$ , which corresponds to a time response of $T_{\lambda 1} = T_{\lambda 2}$ =11 ms. The parameters for the 2&4H-NOTCH-1 are tuned to $\gamma_{1-1} = \gamma_{2-1}$ =400, which corresponds to $T_{\gamma 1-1} = T_{\gamma 2-1}$ =5.5 ms. In the controller expressions it is assumed that the fundamental frequency is a known constant of $\omega_0$ =100$\pi$ r/s. Therefore, we use the implementation of the reduced DG-MPPT-iless. A first order LPF of the form $\dfrac{1}{\tau_2 s + 1}$ has been included to filter the signal $\beta \dfrac{dp}{dz}$ with a constant time of $\tau = 0.01$ s. The parameters for the estimator of $\hat{\bar{p}}$ have been fixed to

$\lambda_0 = 1000$ and $\gamma_0 = 20$. A notch filter of the form 2&4-NOTCH-3 has been applied to $\hat{\bar{p}}$ prior to use it as a feedforward term, with estimation gains $\gamma_{1\text{-}3} = \gamma_{2\text{-}3} = 25$. Moreover, no division by $\langle \tilde{z}^2 \rangle_0$ has been considered. In its place a gain $\beta$ in function of the estimated power $\hat{\bar{p}}$ is considered, this gain is about 0.0001 for the maximum power, and about 0.003 for the minimum power.

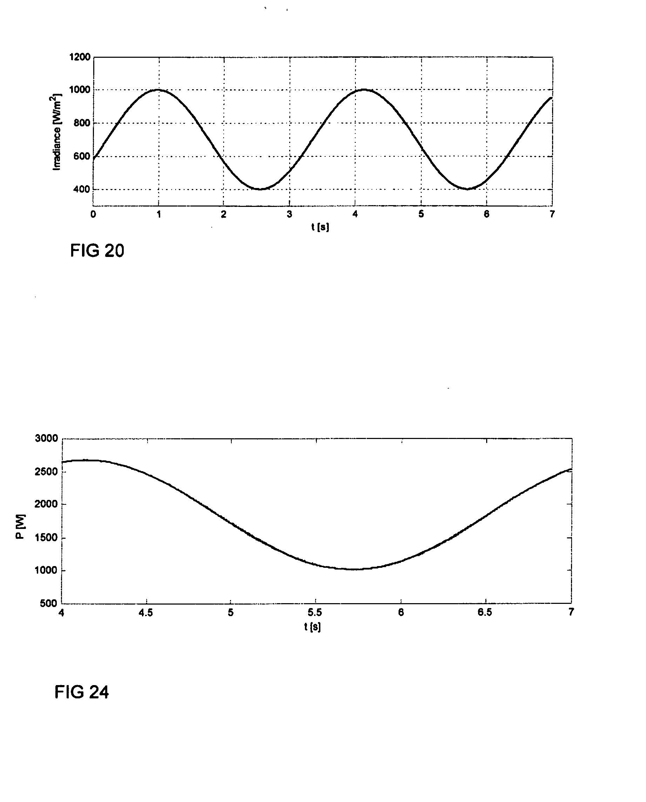

To test the response of the proposed scheme to irradiation changes, a profile for the irradiation has been proposed in such a way that the irradiance changes between 400 and 1000 W/m$^2$ following the shape of a biased sinusoidal function at a frequency of $1/\pi$ Hz, i.e., G = 700 + 300sin($2t$ +$\phi$) W/m$^2$, as shown in Figure 20. The cell temperature has been fixed to 25°C.

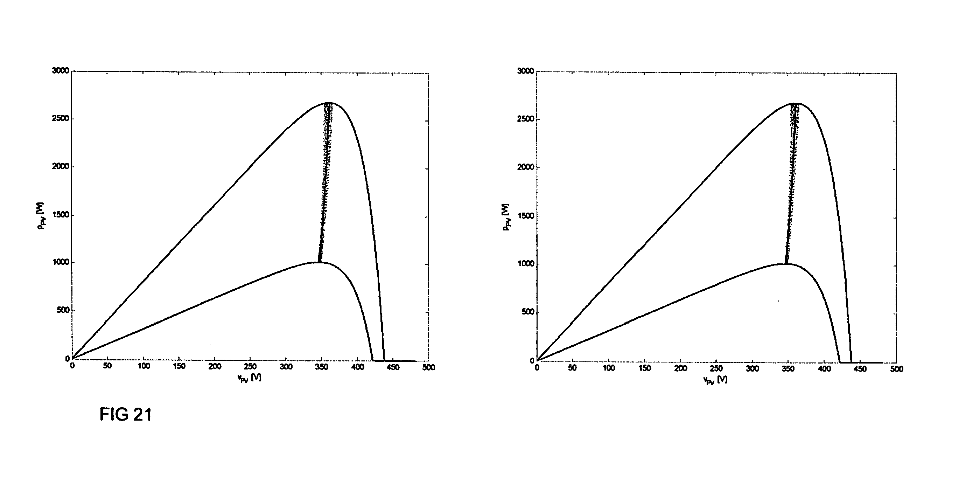

Figure 21 shows the MPP tracking capability of the proposed DG-MPPT-iless when the irradiation is changed from 400 to 1000 W/m$^2$ following the biased sinusoidal shape. On the left side is the result considering the correct value of C in the controller, i.e., 2200 $\mu$F , while on the right is the result considering a 20% mismatch, i.e., 1760 $\mu$F. The set of available MPPs at the different radiations is represented by the gray line in the middle of the actual response in black. Therefore, the PV generated power is very close to the maximum available power in average.

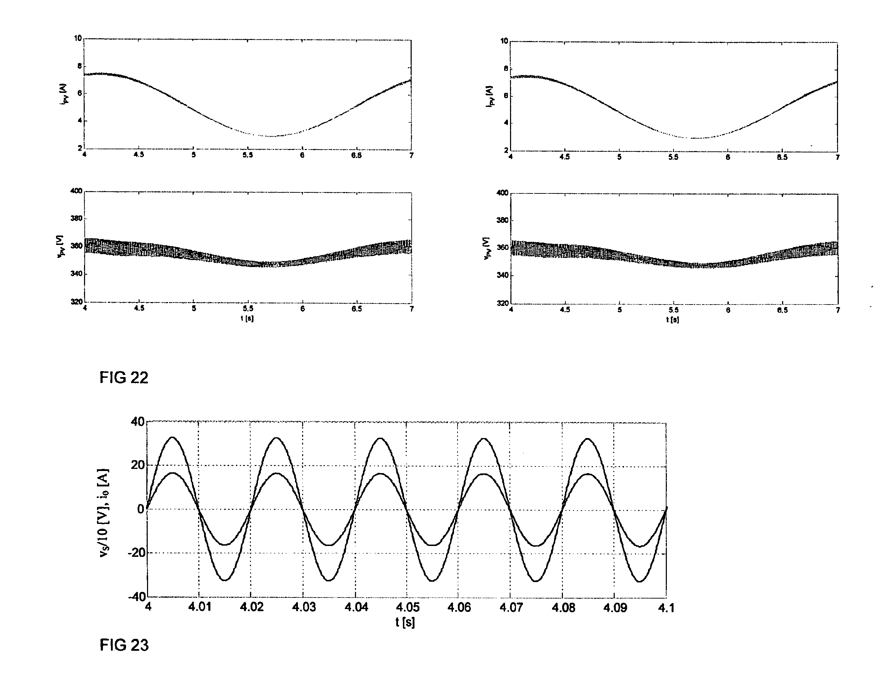

Figure 22 shows the responses of the (top) PV current and (bottom) PV voltage. On the left side the responses considering the correct C in the controller expressions, while on the right a mismatch of 20% has been used. Notice that both responses are very similar.

Figure 23 shows the responses of the grid side current $i_0$ and the scaled grid voltage $v_s$ /10 . Notice that they are both sinusoidal signals in phase, thus, operation with a power factor (PF) close to one is guaranteed.

Figure 24 shows the response of the modulation amplitude P used to compute the grid side current reference

$$i_0^* = \frac{P v_S}{v_{S,RMS}^2} \cdot$$ Notice that this signal has an almost imperceptible ripple, and thus, no further deformation is expected in the grid side current $i_0$, thus guaranteeing a low total harmonic distortion (THD).

In the above, the photovoltaic system is mainly described as having a photovoltaic module. The term "module" should be interpreted broadly as a photovoltaic module consisting of any number of cells, modules, strings or arrays.

It will be obvious to a person skilled in the art that, as the technology advances, the inventive concept can be implemented in various ways. The invention and its embodiments are not limited to the examples described above but may vary within the scope of the claims.

REFERENCES

[1] W. Zhou, H. Yang, Z. Fang, "A novel model for photovoltaic array performance prediction," Applied Energy, Vol. 84(12), pp. 1187-1198, Dec. 2007.

[2] M.C. Cavalcanti, K.C. Oliveira, G.M. Azevedo, D. Moreira and F.A. Neves, "Maximum power point tracker techniques for photovoltaic systems," in Proc. Power Electronics and Intelligent Control for Energy Conservation PELINCEC'05, 2005, Warsaw, pp. 1-8.

[3] T. Esram, P.L. Chapman, "Comparison of photovoltaic array maximum power point tracking techniques," IEEE Transactions on Energy Conversion, Vol. 22(2), pp. 439-449, June 2007.

[4] E. Koutroulis, K. Kalaitzakis, N.C. Voulgaris, "Development of a microcontroller-based, photovoltaic maximum power point tracking control system," IEEE Trans. on Power Electronics, Vol. 16(1), pp. 46-54, Jan. 2001.

[5] A. Pandey, N. Dasgupta and A.K. Mukerjee, "High-Performance algorithms for drift avoidance and fast tracking in solar MPPT System," IEEE Transactions on Energy Conversion, Vol. 23(2), pp. 681-689, June 2008.

[6] D. Sera, R. Teodorescu, J. Hantschel, and M. Knoll, "Optimized maximum power point tracker for fast-changing environmental conditions," IEEE Transactions on Industrial Electronics, Vol. 55(7), pp. 2629- 2637, July 2008.

[7] M. Miyatake, T. Inada, , I. Hiratsuka, H. Zhao, H. Otsuka and M. Nakano, "Control characteristics of a Fibonacci-search-based maximum power point tracker when a photovoltaic array is partially shaded," in Proc. 4th International Power Electronics and Motion Control Conference IPEMC 2004, 14-16 Aug. 2004, Vol. 2, pp. 816 - 821.

[8] T.Y. Kim, H.G. Ahn, S.K. Park and Y.K. Lee, "A novel maximum power point tracking control for photovoltaic power system under rapidly changing solar radiation," in Proc. IEEE International Symposium on Industrial Electronics ISIE 2001, 12-16 June, 2001, Vol. 2, pp. 1011-1014.

[9] C.R. Sullivan and M.J. Powers, "A high-efficiency maximum power point tracker for photovoltaic arrays in a solar-powered race vehicle," in Proc. 24th Annual IEEE Power Electronics Specialists Conference, PESC '93, 20-24 June 1993, pp. 574 - 580

**Claims**

1. A method of tracking the maximum power point of a photovoltaic module in a system comprising a capacitor and an inverter both connected in parallel with the photovoltaic module, the method comprising
   measuring output voltage ($v_C$) of the photovoltaic module,
   determining output voltage ($e$) of the inverter connected to the photovoltaic module,
   measuring output current ($i_1$) of the inverter connected to the photovoltaic module, **characterized by**
   defining a variable ($z$) relating to energy of the capacitor as square of the measured photovoltaic module output voltage divided by two,
   extracting second harmonic component ($\tilde{z}$) from the defined variable ($z$),
   estimating the second harmonic component ($\tilde{p}$) of the module output power ($p$) using the defined variable ($z$), measured output current ($i_1$) of the inverter and the determined output voltage ($e$) of the inverter,
   multiplying the obtained harmonic components with each other,
   extracting a DC component ($\langle \tilde{p}\tilde{z} \rangle_{DC}$) from the obtained product ($\tilde{p}\tilde{z}$), and
   forming a control signal ($P; v_{ref}$) for controlling the inverter connected to the photovoltaic module by using the extracted DC component in a PI algorithm.

2. A method according to claim 1, **characterized in that** the forming of the control signal ($P$) comprises
   estimating the DC component ($\hat{\bar{p}}$) of the power of the module from the output voltage of the photovoltaic module, output voltage of the inverter and output current of the inverter,
   using the estimated DC component ($\hat{\bar{p}}$) of the power ($p$) of the module as a feedforward signal and subtracting the output of the PI algorithm from the feedforward signal, and using the control signal ($P$) as a current amplitude reference.

3. A method according to claim 1 or 2, **characterized in that** the forming of the control signal ($v_{ref}$) comprises
   multiplying the extracted DC component ($\langle \tilde{p}\tilde{z} \rangle_{DC}$) with a constant ($\beta$) and
   adding the output voltage ($v_c$) of the photovoltaic module to the obtained product for producing control signal ($v_{ref}$).

4. Method according to claim 1 or 2, **characterized in that** the forming of the control signal ($v_{ref}$) comprises
   taking the sign of the extracted DC component ($\langle \tilde{p}\tilde{z} \rangle_{DC}$)
   multiplying the sign with a constant ($\beta$), and
   adding the output voltage ($v_C$) of the photovoltaic module to the obtained product for producing control signal ($v_{ref}$).

5. Method according to claim 1 or 2, **characterized in that** the forming of the control signal ($v_{ref}$) comprises
   integrating the extracted DC component ($\langle \tilde{p}\tilde{z} \rangle_{DC}$), and
   multiplying this integral with a constant ($\beta$) for producing control signal ($v_{ref}$).

6. Method according to any one of the claims 3 to 5, **characterized in that** the method comprises
   using the control signal ($v_{ref}$) as a voltage reference for the inverter for controlling the output voltage of the photovoltaic module.

7. Method according to any one of the claims 3 to 5, **characterized in that** the method comprises
   using the control signal ($v_{ref}$) as input to a PI algorithm for obtaining control signal ($P$) for controlling the current amplitude of the photovoltaic module.

8. A method according to claim 1 or 2, **characterized in that** the forming of the control signal ($P$) comprises
   calculating the square of the second harmonic component of the variable relating to energy of the capacitor,
   extracting a DC component from the calculated square,
   dividing the DC component of the product of second harmonic components of variable ($z$) and power of the module with the DC component of the square of the second harmonic of variable ($z$), and

feeding the result of the division to the PI algorithm for obtaining the control signal ($P$).

9. A system comprising an arrangement for tracking the maximum power point of a photovoltaic module, a capacitor and an inverter both connected in parallel with the photovoltaic module, the arrangement comprising

means for measuring output voltage ($v_C$) of the photovoltaic module,
means for determining output voltage ($e$) of the inverter connected to the photovoltaic module,
means for measuring output current ($i_1$) of the inverter connected to the photovoltaic module, **characterized by**
means for defining a variable ($z$) relating to energy of the capacitor as square of the measured photovoltaic module output voltage divided by two,
means for extracting second harmonic component ($\tilde{z}$) from the defined variable ($z$),
means for estimating the second harmonic component ($\tilde{p}$) of the module output power ($p$) using the defined variable ($z$), measured output current ($i_1$) of the inverter and the determined output voltage ($e$) of the inverter,
means for multiplying the obtained harmonic components with each other,
means for extracting a DC component ($\langle \tilde{p}\tilde{z} \rangle_{DC}$) from the obtained product ($\tilde{p}\tilde{z}$), and
means for forming a control signal ($P;v_{ref}$) for controlling the inverter connected to the photovoltaic module by using the extracted DC component in a PI algorithm.

## Patentansprüche

1. Verfahren zum Maximum-Power-Point-Tracking eines Photovoltaikmoduls in einem System, das einen Kondensator und einen Wechselrichter aufweist, die beide parallel mit dem Photovoltaikmodul geschaltet sind, wobei das Verfahren aufweist:

Messung von Ausgangsspannung ($v_C$) des Photovoltaikmoduls,
Bestimmung von Ausgangsspannung ($e$) des mit dem Photovoltaikmodul geschalteten Wechselrichters,
Messung von Ausgangsstroms ($i_1$) des mit dem Photovoltaikmodul geschalteten Wechselrichters, **gekennzeichnet durch**
Definierung einer auf die Energie des Kondensators bezogenen Variable ($z$) als Quadrat der gemessenen Ausgangsspannung des Photovoltaikmoduls, das **durch** zwei dividiert wird,
Radizierung von zweiter Harmonischen ($\tilde{z}$) aus der definierten Variable ($z$),
Schätzung der zweiten Harmonischen ($\tilde{p}$) der Ausgangsleistung ($p$) des Moduls anhand der definierten Variable ($z$), des gemessenen Ausgangsstroms ($i_1$) des Wechelrichters und der bestimmten Ausgangsspannung ($e$) des Wechselrichters,
Multiplizierung der erhaltenen Harmonischen miteinander,
Radizierung einer Gleichstromkomponente ($\langle \tilde{p}\tilde{z} \rangle_{DC}$) aus dem erhaltenen Produkt ($\tilde{p}\tilde{z}$) und
Bildung eines Steuersignals ($P;v_{ref}$) zur Steuerung des mit dem Photovoltaikmodul geschalteten Wechselrichters, indem die radizierte Gleichstromkomponente in einem PI-Algorithmus verwendet wird.

2. Verfahren nach Anspruch 1, **dadurch gekennzeichnet, dass** die Bildung des Steuersignals ($P$) aufweist:

Schätzung der Gleichstromkomponente ($\hat{\bar{p}}$) der Leistung des Moduls von der Ausgangsspannung des Photovoltaikmoduls, der Ausgangsspannung des Wechselrichters und dem Ausgangsstrom des Wechselrichters,

Verwendung der geschätzten Gleichstromkomponente ($\hat{\bar{p}}$) der Leistung ($p$) des Moduls als Vorsteuersignal und Subtrahierung der Ausgabe des PI-Algorithmus von dem Vorsteuersignal und Verwendung des Steuersignals ($P$) als Stromamplitudenreferenz.

3. Verfahren nach Anspruch 1 oder 2, **dadurch gekennzeichnet, dass** die Bildung des Steuersignals ($v_{ref}$) aufweist:

Multiplizierung der radizierten Gleichstromkomponente ($\langle \tilde{p}\tilde{z} \rangle_{DC}$) mit einer Konstante ($\beta$) und
Addierung der Ausgangsspannung ($v_C$) des Photovoltaikmoduls zum erhaltenen Produkt zur Erzeugung eines Steuersignals ($v_{ref}$).

4. Verfahren nach Anspruch 1 oder 2, **dadurch gekennzeichnet, dass** die Bildung des Steuersignals ($v_{ref}$) aufweist:

Nehmen des Zeichens der radizierten Gleichstromkomponente ($\langle \tilde{p}\tilde{z} \rangle_{DC}$),
Multiplizierung des Zeichens mit einer Konstante ($\beta$) und

Addierung der Ausgangsspannung ($v_C$) des Photovoltaikmoduls zum erhaltenen Produkt zur Erzeugung eines Steuersignals ($v_{ref}$).

**5.** Verfahren nach Anspruch 1 oder 2, **dadurch gekennzeichnet, dass** die Bildung des Steuersignals ($v_{ref}$) aufweist:

Integrieren der radizierten Gleichstromkomponente ($\langle \tilde{p}\tilde{z} \rangle_{DC}$) und
Multiplizierung dieses Integrals mit einer Konstante ($\beta$) zur Erzeugung eines Steuersignals ($v_{ref}$).

**6.** Verfahren nach einem der Ansprüche 3 bis 5, **dadurch gekennzeichnet, dass** das Verfahren aufweist:

Verwendung des Steuersignals ($v_{ref}$) als Spannungsreferenz für den Wechselrichter zur Steuerung der Ausgangsspannung des Photovoltaikmoduls.

**7.** Verfahren nach einem der Ansprüche 3 bis 5, **dadurch gekennzeichnet, dass** das Verfahren aufweist:

Verwendung des Steuersignals ($v_{ref}$) als Eingabe in einen PI-Algorithmus, um ein Steuersignal ($P$) zur Steuerung der Stromamplitude des Photovoltaikmoduls zu erhalten.

**8.** Verfahren nach Anspruch 1 oder 2, **dadurch gekennzeichnet, dass** die Bildung des Steuersignals ($P$) aufweist:

Berechnung des Quadrats der zweiten Harmonischen der auf die Energie des Kondensators bezogenen Variable,
Radizierung einer Gleichstromkomponente aus dem berechneten Quadrat,
Dividierung der Gleichstromkomponente des Produkts der zweiten Harmonischen der Variable ($z$) und der Leistung des Moduls durch die Gleichstromkomponente des Quadrats der zweiten Harmonischen der Variable ($z$) und
Eingeben des Ergebnisses der Division in den PI-Algorithmus zur Erhaltung des Steuersignals ($P$).

**9.** System mit einer Anordnung zum Maximum-Power-Point-Tracking eines Photovoltaikmoduls, einem Kondensator und einem Wechselrichter, die beide parallel mit dem Photovoltaikmodul geschaltet sind, wobei die Anordnung aufweist:

Mittel zur Messung von Ausgangsspannung ($v_C$) des Photovoltaikmoduls,
Mittel zur Bestimmung von Ausgangsspannung ($e$) des mit dem Photovoltaikmodul geschalteten Wechselrichters,
Mittel zur Messung von Ausgangsstroms ($i_1$) des mit dem Photovoltaikmodul geschalteten Wechselrichters, **gekennzeichnet durch**
Mittel zur Definierung einer auf die Energie des Kondensators bezogenen Variable ($z$) als Quadrat der gemessenen Ausgangsspannung des Photovoltaikmoduls, das **durch** zwei dividiert wird,
Mittel zur Radizierung von zweiter Harmonischen ($\tilde{z}$) aus der definierten Variable ($z$),
Mittel zur Schätzung der zweiten Harmonischen ($\tilde{p}$) der Ausgangsleistung ($p$) des Moduls anhand der definierten Variable ($z$), des gemessenen Ausgangsstroms ($i_1$) des Wechelrichters und der bestimmten Ausgangsspannung ($e$) des Wechselrichters,
Mittel zur Multiplizierung der erhaltenen Harmonischen miteinander,
Mittel zur Radizierung einer Gleichstromkomponente ($\langle \tilde{p}\tilde{z} \rangle_{DC}$) aus dem erhaltenen Produkt ($\tilde{p}\tilde{z}$) und
Mittel zur Bildung eines Steuersignals ($P$;$v_{ref}$) zur Steuerung des mit dem Photovoltaikmodul geschalteten Wechselrichters, indem die radizierte Gleichstromkomponente in einem PI-Algorithmus verwendet wird.

## Revendications

**1.** Procédé de suivi du point de puissance maximum d'un module photovoltaïque dans un système comprenant un condensateur et un onduleur connectés tous deux en parallèle au module photovoltaïque, le procédé comprenant :

la mesure d'une tension de sortie ($v_C$) du module photovoltaïque,
la détermination de la tension de sortie ($e$) de l'onduleur connecté au module photovoltaïque,
la mesure du courant de sortie ($i_1$) de l'onduleur connecté au module photovoltaïque, **caractérisé par**
la définition d'une variable ($z$) concernant l'énergie du condensateur en tant que carré de la tension de sortie de module photovoltaïque mesurée divisée par deux,

l'extraction d'une deuxième composante harmonique $(\tilde{z})$ de la variable $(z)$ définie,

l'estimation de la deuxième composante harmonique $(\tilde{p})$ de la puissance de sortie de module $(p)$ en utilisant la variable $(z)$ définie, le courant de sortie $(i_1)$ mesuré de l'onduleur et la tension de sortie $(e)$ déterminée de l'onduleur,

la multiplication des composantes harmoniques obtenues l'une par l'autre,

l'extraction d'une composante continue $(\langle \tilde{p}\tilde{z} \rangle_{DC})$ du produit $(\tilde{p}\tilde{z})$ obtenu, et

la formation d'un signal de commande $(P; v_{ref})$ pour commander l'onduleur connecté au module photovoltaïque en utilisant la composante continue extraite dans un algorithme PI.

2. Procédé selon la revendication 1, **caractérisé en ce que** la formation du signal de commande $(P)$ comprend :

l'estimation de la composante continue $(\hat{\bar{p}})$ de la puissance du module à partir de la tension de sortie du module photovoltaïque, de la tension de sortie de l'onduleur et du courant de sortie de l'onduleur,

l'utilisation de la composante continue $(\hat{\bar{p}})$ estimée de la puissance $(p)$ du module en tant que signal d'anticipation et la soustraction de la sortie de l'algorithme PI du signal d'anticipation, et l'utilisation du signal de commande $(P)$ en tant que référence d'amplitude de courant.

3. Procédé selon la revendication 1 ou 2, **caractérisé en ce que** la formation du signal de commande $(v_{ref})$ comprend :

la multiplication de la composante continue $(\langle \tilde{p}\tilde{z} \rangle_{DC})$ extraite par une constante $\beta$, et

l'ajout de la tension de sortie $(v_C)$ du module photovoltaïque au produit obtenu pour produire un signal de commande $(v_{ref})$.

4. Procédé selon la revendication 1 ou 2, **caractérisé en ce que** la formation du signal de commande $(v_{ref})$ comprend :

la prise du signe de la composante continue $(\langle \tilde{p}\tilde{z} \rangle_{DC})$ extraite,

la multiplication du signe par une constante $\beta$, et

l'ajout de la tension de sortie $(v_C)$ du module photovoltaïque au produit obtenu pour produire un signal de commande $(v_{ref})$.

5. Procédé selon la revendication 1 ou 2, **caractérisé en ce que** la formation du signal de commande $(v_{ref})$ comprend :

l'intégration de la composante continue $(\langle \tilde{p}\tilde{z} \rangle_{DC})$ extraite, et

la multiplication de cette intégrale par une constante $\beta$ pour produire un signal de commande $(v_{ref})$.

6. Procédé selon l'une quelconque des revendications 3 à 5, **caractérisé en ce que** le procédé comprend :

l'utilisation du signal de commande $(v_{ref})$ en tant que référence de tension pour l'onduleur pour commander la tension de sortie du module photovoltaïque.

7. Procédé selon l'une quelconque des revendications 3 à 5, **caractérisé en ce que** le procédé comprend :

l'utilisation du signal de commande $(v_{ref})$ en tant qu'entrée d'un algorithme PI pour obtenir un signal de commande $(P)$ pour commander l'amplitude du courant du module photovoltaïque.

8. Procédé selon la revendication 1 ou 2, **caractérisé en ce que** la formation du signal de commande $(P)$ comprend :

le calcul du carré de la deuxième composante harmonique de la variable concernant l'énergie du condensateur,

l'extraction d'une composante continue du carré calculé,

la division de la composante continue du produit des deuxièmes composantes harmoniques de la variable $(z)$ et de la puissance du module par la composante continue du carré de la deuxième harmonique de la variable $(z)$, et

la fourniture du résultat de la division à l'algorithme PI pour obtenir le signal de commande $(P)$.

9. Système comprenant un agencement de suivi du point de puissance maximum d'un module photovoltaïque, un condensateur et un onduleur connectés tous deux en parallèle au module photovoltaïque, l'agencement comprenant :

des moyens pour mesurer une tension de sortie ($v_C$) du module photovoltaïque,

des moyens pour déterminer une tension de sortie ($e$) de l'onduleur connecté au module photovoltaïque,

des moyens pour mesurer un courant de sortie ($i_1$) de l'onduleur connecté au module photovoltaïque, **caractérisé par**

des moyens pour définir une variable ($z$) concernant l'énergie du condensateur en tant que carré de la tension de sortie de module photovoltaïque mesurée divisée par deux,

des moyens pour extraire une deuxième composante harmonique ($\tilde{z}$) de la variable définie ($z$),

des moyens pour estimer la deuxième composante harmonique ($\tilde{p}$) de la puissance de sortie de module ($p$) en utilisant la variable ($z$) définie, le courant de sortie ($i_1$) mesuré de l'onduleur et la tension de sortie ($e$) déterminée de l'onduleur,

des moyens pour multiplier les composantes harmoniques obtenues l'une par l'autre,

des moyens pour extraire une composante continue ($\langle \tilde{p}\tilde{z} \rangle_{DC}$) du produit ($\tilde{p}\tilde{z}$) obtenu, et

des moyens pour former un signal de commande ($P; v_{ref}$) pour commander l'onduleur connecté au module photovoltaïque en utilisant la composante continue extraite dans un algorithme PI.

FIG 1

FIG 2

FIG 3

FIG 4

**FIG 5**

**FIG 6**

**FIG 7**

FIG 8

FIG 9

FIG 10

FIG 11

FIG 12

FIG 13

FIG 14

FIG 15

FIG 16

FIG 17

FIG 18

FIG 19

FIG 20

FIG 24

FIG 21

EP 2 431 832 B1

FIG 22

FIG 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **D. CASADEI et al.** Single-Phase Single-Stage Photovoltaic Generation System Based on a Ripple Correlation Control Maximum Power Point Tracking. *IEEE Transactions on Energy Conversion,* 01 June 2006, vol. 21 (2), 562-568
- **W. ZHOU ; H. YANG ; Z. FANG.** A novel model for photovoltaic array performance prediction. *Applied Energy,* December 2007, vol. 84 (12), 1187-1198
- **M.C. CAVALCANTI ; K.C. OLIVEIRA ; G.M. AZEVEDO ; D. MOREIRA ; F.A. NEVES.** Maximum power point tracker techniques for photovoltaic systems. *Proc. Power Electronics and Intelligent Control for Energy Conservation PELINCEC'05,* 2005, 1-8
- **T. ESRAM ; P.L. CHAPMAN.** Comparison of photovoltaic array maximum power point tracking techniques. *IEEE Transactions on Energy Conversion,* June 2007, vol. 22 (2), 439-449
- **E. KOUTROULIS ; K. KALAITZAKIS ; N.C. VOULGARIS.** Development of a microcontroller-based, photovoltaic maximum power point tracking control system. *IEEE Trans. on Power Electronics,* January 2001, vol. 16 (1), 46-54

- **A. PANDEY ; N. DASGUPTA ; A.K. MUKERJEE.** High-Performance algorithms for drift avoidance and fast tracking in solar MPPT System. *IEEE Transactions on Energy Conversion,* June 2008, vol. 23 (2), 681-689
- **D. SERA ; R. TEODORESCU ; J. HANTSCHEL ; M. KNOLL.** Optimized maximum power point tracker for fast-changing environmental conditions. *IEEE Transactions on Industrial Electronics,* July 2008, vol. 55 (7), 2629-2637
- **M. MIYATAKE ; T. INADA ; I. HIRATSUKA ; H. ZHAO ; H. OTSUKA ; M. NAKANO.** Control characteristics of a Fibonacci-search-based maximum power point tracker when a photovoltaic array is partially shaded. *Proc. 4th International Power Electronics and Motion Control Conference IPEMC 2004,* 14 August 2007, vol. 2, 816-821
- **T.Y. KIM ; H.G. AHN ; S.K. PARK ; Y.K. LEE.** A novel maximum power point tracking control for photovoltaic power system under rapidly changing solar radiation. *Proc. IEEE International Symposium on Industrial Electronics ISIE 2001,* 12 June 2001, vol. 2, 1011-1014
- **C.R. SULLIVAN ; M.J. POWERS.** A high-efficiency maximum power point tracker for photovoltaic arrays in a solar-powered race vehicle. *Proc. 24th Annual IEEE Power Electronics Specialists Conference, PESC '93,* 20 June 1993, 574-580